# FASCICULE DE BREVET EUROPEEN

(11) **EP 1 260 689 B1**
(45) Date de publication et mention de la délivrance du brevet: **07.12.2005**
(21) Numéro de dépôt: 02291248.9
(22) Date de dépôt: 21.05.2002
(51) Int. Cl.: F02C 7/232, F02C 9/26

(54) **Doseur de carburant à deux sorties intégrées**
Kraftstoffzumessvorrichtung mit zwei integrierten Auslässen
Fuel metering device with two integrated exit ports

(30) Priorité: 25.05.2001 FR 0106872
(43) Date de publication de la demande: 27.11.2002
(73) Titulaire: HISPANO SUIZA, 92700 Colombes (FR)
(72) Inventeur: Hodinot, Laurent, 77127 Lieusaint (FR); Leclerc, Henry, 91260 Juvisy sur Orge (FR); Maillard, Claude, 77870 Vulaines sur Seine (FR); Maillard, David, 77590 Bois le Roi (FR)
(74) Mandataire: David, Alain

(56) Documents cités:
- EP-A- 0 313 503
- EP-A- 0 802 311
- FR-A- 1 595 739
- FR-A- 2 528 495
- US-A- 3 465 778
- US-A- 3 774 394
- US-A- 4 226 365
- US-A- 5 732 730

## Description

### Domaine de l'invention

La présente invention se rapporte au domaine de l'injection de carburant dans les turbomachines et elle concerne plus particulièrement un dispositif de dosage de carburant à deux sorties (dit aussi double ports).

### Art antérieur

Dans les turbomachines, les meilleures performances sont obtenues pour des vitesses de rotation des organes tournants proches des limites maximums admissibles au-delà desquelles une perte d'aubes de compresseur ou de turbine peut survenir. Or, une telle perte est de nature à engendrer une perforation du carter moteur dont les conséquences peuvent aller jusqu'à une destruction complète de la turbomachine.

Aussi, et comme le préconisent d'ailleurs les règlements internationaux relatifs à l'aviation civile, l'utilisation d'un dispositif limiteur de survitesse s'avère indispensable pour éviter que la vitesse de ces organes tournants ne dépasse ces vitesses maximales autorisées.

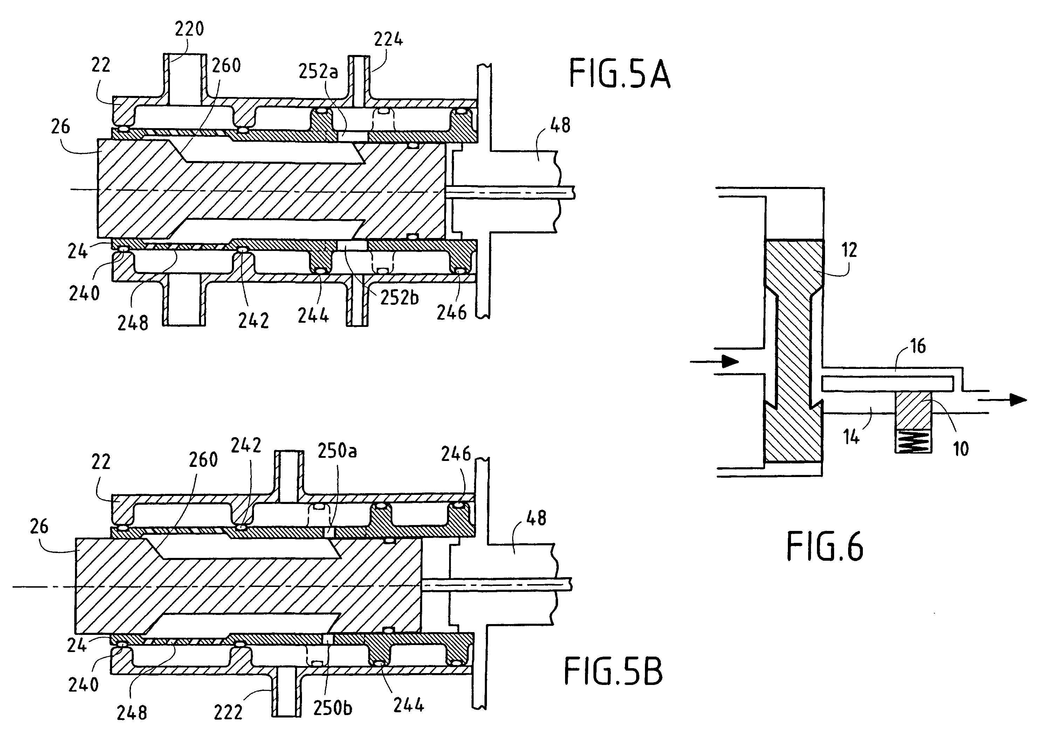

De plus, dans les turbomachines actuelles, il doit être possible pour le pilote de l'aéronef de revenir à un mode de fonctionnement normal après l'enclenchement du dispositif limiteur de survitesse. Pour cela, et comme illustré à la figure 6, le clapet de survitesse 10 de ce limiteur disposé en sortie du dispositif de dosage 12 doit pouvoir obturer uniquement la sortie des grands débits de carburant 14 sans modifier (perturber) la sortie des petits débits 16 fournissant notamment le débit de survitesse auquel est limité le débit dosé alimentant les injecteurs une fois la fermeture du clapet de survitesse effective.

Une solution élégante à ce problème consiste donc à mettre en oeuvre un dispositif de dosage à deux sorties de carburant dosé. Un tel doseur double ports est par exemple décrit dans le brevet américain US 5 772 182. Malheureusement, la structure linéaire de ce doseur, dite aussi en tandem car les fentes de dosage sont disposées en série les unes derrière les autres, présente le grave inconvénient de provoquer un allongement particulièrement important du dispositif de dosage (pratiquement une dimension double d'un doseur conventionnel) et donc, en conséquence, une augmentation non négligeable de la masse embarquée.

Un autre dispositif de dosage du carburant à deux sorties est montré par US 5 832 730. Dans ce document les orifices de dosage sont indépendants les uns des autres et ne sont pas disposés de façon à assurer une continuité d'écoulement de carburant.

### Objet et définition de l'invention

La présente invention propose donc de pallier ces inconvénients avec un dispositif de dosage de carburant particulièrement compact, c'est à dire présentant un encombrement et une masse minimaux. Un but de l'invention est aussi de proposer un dispositif qui ne perturbe pas le débit dosé en dessous du débit limité de survitesse.

Ces buts sont atteints par un dispositif de dosage de carburant dans une turbomachine comportant une enveloppe externe cylindrique à l'intérieur de laquelle est monté un cylindre distributeur dans lequel peut se déplacer linéairement un piston de dosage sous l'action d'un élément de commande, ladite enveloppe cylindrique comportant un orifice d'entrée pour l'admission du carburant sous pression et au moins un orifice de sortie pour l'injection de ce carburant dans une chambre de combustion de ladite turbomachine et ledit piston de dosage comportant une lumière annulaire formant chambre de distribution pour le carburant admis par ledit orifice d'entrée et refoulé par ledit au moins un orifice de sortie, caractérisé en ce que ledit cylindre distributeur comporte une pluralité d'orifices radiaux d'alimentation pour admettre le carburant dans ladite chambre de distribution depuis ledit orifice d'entrée et d'une part au moins un premier orifice de dosage pour expulser le carburant vers ledit premier orifice de sortie et d'autre part au moins un second orifice de dosage pour expulser le carburant vers ledit second orifice de sortie, lesdits au moins un premier et au moins un second orifices de dosage étant séparés par des moyens d'étanchéité disposés à la périphérie dudit cylindre distributeur.

Avec la présente structure de doseur, qui comporte une cloison étanche de séparation, il devient possible d'intégrer dans un même dispositif la fourniture à la fois de grands et de petits débits de carburant. Le circuit des petits débits n'est ainsi en aucune façon perturbé par le clapet de survitesse et l'encombrement est particulièrement réduit par rapport aux dispositifs de l'art antérieur à deux doseurs mis bout à bout.

Selon un mode de réalisation avantageux, lesdits premiers orifices de dosage sont au nombre de deux et disposés radialement en opposition l'un de l'autre. Ces premiers orifices de dosage présentent de préférence une section de passage exponentielle. De même, avantageusement lesdits seconds orifices de dosage sont au nombre de deux et disposés radialement en opposition l'un de l'autre. Ces seconds orifices de dosage présentent de préférence une section de passage exponentielle.

Lesdits au moins un premier et un au moins un second orifices de dosage sont disposés dans un même plan transversal et décalés deux à deux de 90°, de façon à assurer une continuité d'écoulement du carburant vers ladite chambre de combustion lors du déplacement dudit piston de dosage. Lesdits premiers orifices de dosage présentent une largeur a, au niveau de leur partie aval, égale à une largeur b desdits seconds orifices de dosage, au niveau de leur partie amont.

Selon un premier mode de réalisation, lesdits moyens d'étanchéité comportent un joint élastomère monté dans une gorge d'une cloison de séparation se prolongeant à la périphérie externe dudit cylindre distributeur et serpentant entre lesdits premiers et seconds orifices de dosage. Alternativement, lesdits moyens d'étanchéité peuvent aussi comporter un joint élastomère monté dans une gorge d'un puits de séparation disposé autour de chacun desdits premiers orifices de dosage, afin de les isoler desdits seconds orifices de dosage.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue en perspective d'un premier mode de réalisation d'un dispositif de dosage à deux sorties selon l'invention,
- la figure 2 est une vue développée au niveau des orifices de dosage du dispositif de dosage à deux sorties de la figure 1,
- la figure 3 est une vue en perspective d'un second mode de réalisation d'une partie d'un dispositif de dosage à deux sorties selon l'invention,
- la figure 4 est une vue en coupe d'un orifice de dosage du dispositif de dosage à deux sorties de la figure 3,
- les figures 5A et 5B sont des vues en coupe longitudinale selon respectivement les plans VA et VB de la figure 1 correspondant à deux positions distinctes du dispositif de dosage à deux sorties de la figure 1, et
- la figure 6 est une vue partielle très schématique d'un système d'injection de carburant d'une turbomachine pourvu d'un dispositif limiteur de survitesse.

### Description détaillée d'un mode de réalisation préférentiel

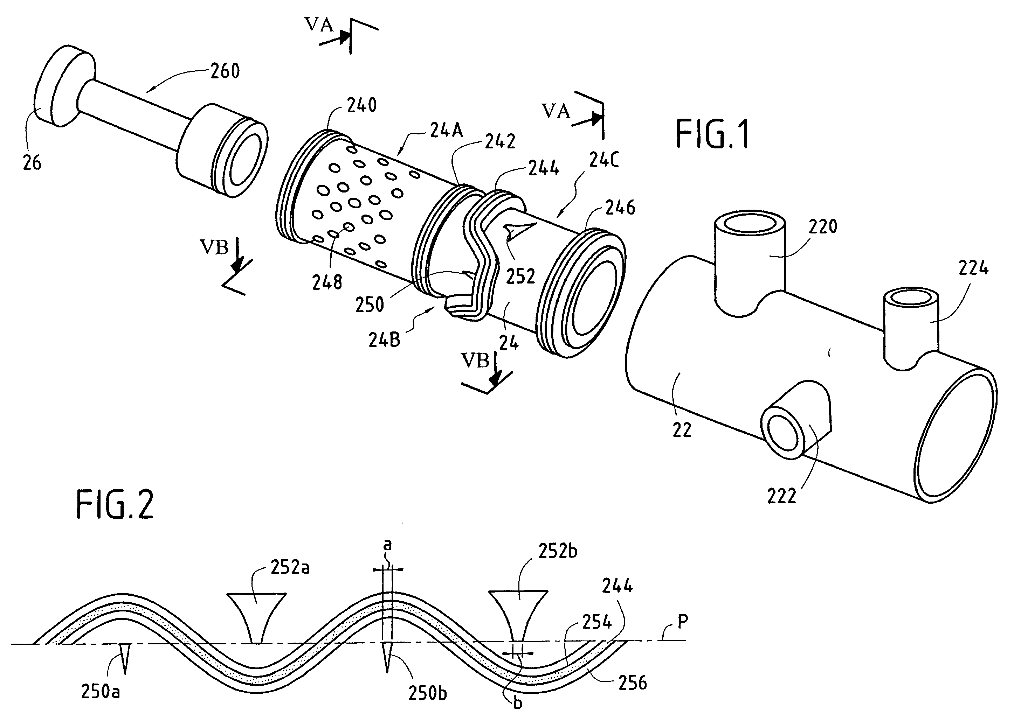

La figure 1 illustre en perspective éclatée un dispositif de dosage de carburant à deux orifices de sortie mis en oeuvre dans un système d'injection de carburant conventionnel d'une turbomachine d'aéronef. Ce dispositif de dosage de carburant est l'élément central du système d'injection qui contrôle le débit de carburant s'écoulant entre une pompe haute pression assurant une pressurisation du carburant soutiré dans un réservoir de carburant et un circuit d'injection de carburant dans la chambre de combustion de cette turbomachine.

Le dispositif de dosage 20 est selon l'invention formé de trois parties concentriques avec une enveloppe externe cylindrique 22 dont lequel est montée une fourrure 24 elle même cylindrique, formant distributeur, et à l'intérieur de laquelle un piston 26 peut se déplacer linéairement de façon continue entre deux positions extrêmes.

L'enveloppe cylindrique 22 comporte un orifice d'entrée 220 destiné à être relié en sortie de la pompe haute pression et par lequel est admis le carburant à doser et deux orifices de sortie 222, 224 devant être reliés au circuit d'injection et par lesquels est effectuée l'injection du carburant dans la chambre de combustion de la turbomachine, l'un 222 assurant une injection des petits débits de carburant (notamment débit limité en situation de survitesse) et l'autre 224 celle des grands débits de carburant (fonctionnement normal).

Le piston 26 comporte une lumière annulaire 260 formant chambre de distribution pour le dosage du carburant qui est admis par l'orifice d'entrée 220 et est refoulé par les orifices de sortie 222, 224. Le déplacement du piston dans la fourrure est de préférence actionné classiquement par un élément électromagnétique 28 relié à une extrémité du piston et commandé par un circuit électronique de commande de la turbomachine (non représenté).

Le cylindre distributeur (fourrure 24) disposé entre l'enveloppe cylindrique et le piston comporte des moyens d'étanchéité à sa périphérie extérieure formés par quatre joints annulaires d'étanchéité 240, 242, 244, 246, dont un à chaque extrémité, qui définissent entre eux trois zones distinctes 24A, 24B, 24C pour la distribution du carburant. La première zone de distribution 24A est destinée à coopérer avec l'orifice d'entrée 220 pour recevoir le carburant à doser, la deuxième zone 24B est destinée à coopérer avec le premier orifice de sortie 222 pour injecter le carburant à faible débit et la troisième zone 24C est destinée à coopérer avec le second orifice de sortie 224 pour injecter le carburant à fort débit. Cette admission et cette double injection de carburant dans la turbomachine sont réalisées au travers de différents orifices pratiqués radialement au travers de la paroi de ce cylindre distributeur.

Dans la première zone 24A, délimitée par les premier et deuxième joints annulaires d'étanchéité 240, 242, le cylindre distributeur comporte une pluralité d'orifices d'alimentation 248 disposés radialement à sa périphérie et permettant de diviser et répartir uniformément dans le dispositif de dosage le flux d'alimentation en carburant provenant de l'orifice d'entrée unique 220. Dans la deuxième zone 24B, délimitée par les deuxième et troisième joints annulaires d'étanchéité 242, 244, le cylindre distributeur comporte au moins un et de préférence deux premiers orifices de dosage 250a, 250b disposés à 180° l'un de l'autre (radialement en opposition) et permettant de définir une loi d'écoulement du carburant pour les petits débits. La section de passage de ces premiers orifices de dosage est avantageusement exponentielle. Enfin, dans la troisième zone 24C, délimitée par les troisième et quatrième joints annulaires d'étanchéité 244, 246, le cylindre distributeur comporte au moins un et de préférence deux seconds orifices de dosage 252a, 252b disposés également à 180° l'un de l'autre (radialement en opposition), mais décalés de 90° par rapport aux premiers orifices de dosage, et permettant de définir une loi d'écoulement du carburant pour les grands débits. La section de passage de ces seconds orifices de dosage est aussi avantageusement exponentielle.

Afin d'assurer une parfaite continuité entre l'écoulement aux petits et aux grands débits, les premiers et seconds orifices de dosage sont disposés dans un même plan transversal P, comme l'illustre la figure 2 qui est un plan développé du cylindre distributeur au niveau de ces orifices, et la largeur a de l'orifice des petits débits (à sa partie aval dans le sens d'avancé du piston) est égale à la largeur b de l'orifice des grands débits (à sa partie amont dans le sens d'avancé du piston). On notera tout particulièrement la disposition en lacet du troisième joint annulaire d'étanchéité 244 qui assure un cloisonnement parfaitement étanche entre les orifices définissant les petits et les grands débits. Ce troisième joint est de préférence un joint élastomère monté par adhérisation à chaud dans une gorge 254 d'une cloison de séparation 256 se prolongeant à la périphérie externe du cylindre distributeur et serpentant entre les orifices de dosage. Toutefois, un joint élastomère préalablement refroidi dans sa gorge afin de le rendre rigide lors d'un montage à chaud est aussi possible.

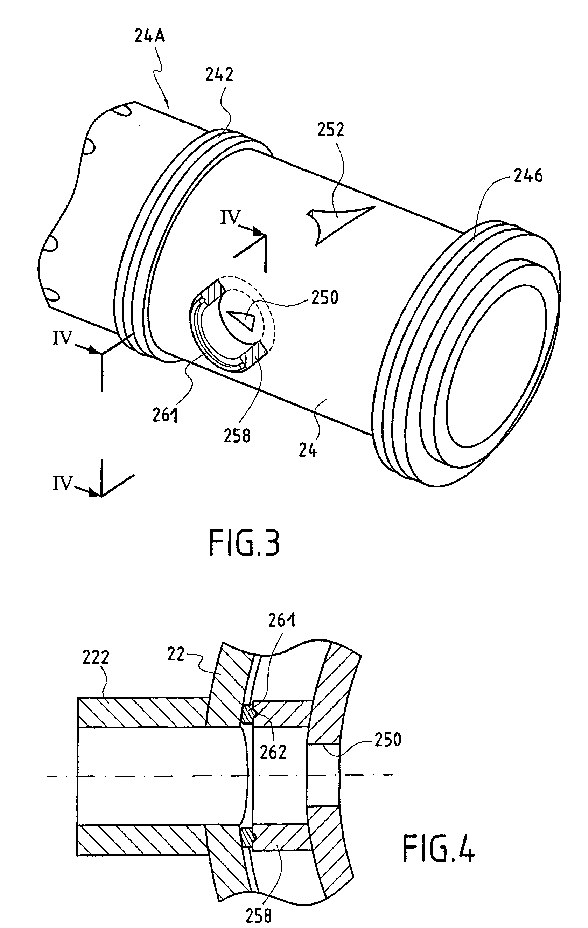

Cette étanchéité par un joint en lacet n'est pas la seule solution envisageable pour assurer une séparation étanche entre les orifices de dosage des petits et grands débits et une solution reposant sur la réalisation de puits autour de chaque orifice de dosage des petits débits (ou éventuellement ceux des grands débits) associés chacun à un joint circulaire est une alternative possible. Les figures 3 et 4 illustrent la fourrure 24 en perspective et en coupe partielle dans ce second mode de réalisation. Les éléments identiques à ceux du mode de réalisation précédent portent les mêmes références.

Dans ce second mode de réalisation, le cloisonnement entre petits et grands débits est assuré par la formation, autour de chaque orifice de dosage des petits débits 250a, 250b, d'un puits d'isolation 258 qui s'étend depuis la surface externe de la fourrure 24 jusque la surface interne de l'enveloppe extérieure 22 et sur lequel est monté un joint d'étanchéité 261. Ce joint d'étanchéité est avantageusement, comme précédemment, un joint élastomère qui, afin de faciliter son montage, peut être collé à chaud dans une gorge 262 de la surface frontale de ce puits ou bien encore refroidi dans cette gorge pour le rigidifier avant montage.

Le fonctionnement du dispositif de dosage selon l'invention est maintenant décrit en regard des figures 5A et 5B qui se rapportent plus précisément au mode de réalisation de la figure 1 (un fonctionnement identique est bien entendu applicable au mode de réalisation de la figure 3). La figure 5A montre la position du piston en fonctionnement normal. Le régime moteur est alors dans un régime dit de croisière supérieure au régime de ralenti. Le carburant introduit par les orifices d'alimentation 248 est injecté dans la chambre de combustion par l'ensemble des orifices de dosage 250, 252. Lorsque la vitesse de rotation de la turbomachine excède une vitesse maximale autorisée prédéfinie, on limite à un débit fixe prédéterminé, appelé débit de survitesse Qsv, l'alimentation en carburant de la chambre de combustion en fermant le clapet de survitesse en aval du second orifice de sortie 224 relatif aux grands débits. La position du piston 26 reste inchangée. Il en est de même lorsque la vitesse de rotation redevient inférieure à la vitesse maximale autorisée. Par contre, si le pilote, par l'intermédiaire de la manette de contrôle des gaz, envoie une commande de ralenti au moteur (ce qui ne peut être accepté par le circuit de commande de la turbomachine que si la turbomachine a retrouvé son intégrité fonctionnelle), cette alimentation en carburant est ramenée à un débit correspondant à un régime de ralenti, inférieur au régime de survitesse précédent, pour permettre ensuite une reprise d'un fonctionnement normal. Dans ce cas, et comme le montre la figure 5B, le piston 26 est déplacé de façon à obturer totalement les orifices de dosage des grands débits 252 mais seulement en partie les orifices de dosage des petits débits 250 permettant ainsi une alimentation limitée du circuit d'injection.

## Revendications

1. Dispositif de dosage de carburant dans une turbomachine, comportant une enveloppe externe cylindrique (22) à l'intérieur de laquelle est montée un cylindre distributeur (24) dans lequel peut se déplacer linéairement un piston de dosage (26) sous l'action d'un élément de commande (28), ladite enveloppe cylindrique comportant un orifice d'entrée (220) pour l'admission du carburant sous pression et des premier et second orifices de sortie (222, 224) pour l'injection de ce carburant dans une chambre de combustion de ladite turbomachine et ledit piston de dosage comportant une lumière annulaire (260) formant chambre de distribution pour le carburant admis par ledit orifice d'entrée et refoulé par lesdits premier et second orifices de sortie, **caractérisé** eh ce que ledit cylindre distributeur comporte une pluralité d'orifices radiaux d'alimentation (248) pour admettre le carburant dans ladite chambre de distribution depuis ledit orifice d'entrée et d'une part au moins un premier orifice de dosage (250a, 250b) pour expulser le carburant vers ledit premier orifice de sortie et d'autre part au moins un second orifice de dosage (252a, 252b) pour expulser le carburant vers ledit second orifice de sortie, lesdits au moins un premier et au moins un second orifices de dosage étant séparés par des moyens d'étanchéité (244, 261) disposés à la périphérie dudit cylindre distributeur et disposés dans un même plan transversal, de façon à assurer une continuité d'écoulement du carburant vers ladite chambre de combustion lors du déplacement dudit piston de dosage.

2. Dispositif selon la revendication 1, **caractérisé en ce que** lesdits premiers orifices de dosage sont au nombre de deux et disposés radialement en opposition l'un de l'autre.

3. Dispositif selon la revendication 2, **caractérisé en ce que** lesdits premiers orifices de dosage présentent une section de passage exponentielle.

4. Dispositif selon la revendication 1 ou la revendication 2, **caractérisé en ce que** lesdits seconds orifices de dosage sont au nombre de deux et disposés radialement en opposition l'un de l'autre.

5. Dispositif selon la revendication 4, **caractérisé en ce que** lesdits seconds orifices de dosage présentent une section de passage exponentielle.

6. Dispositif selon la revendication 1, **caractérisé en ce que** lesdits premiers orifices de dosage présentent une largeur a, au niveau de leur partie aval, égale à une largeur b desdits seconds orifices de dosage, au niveau de leur partie amont.

7. Dispositif selon la revendication 1, **caractérisé en ce que** lesdits premiers et seconds orifices de dosage sont décalés deux à deux de 90°.

8. Dispositif selon la revendication 1, **caractérisé en ce que** lesdits moyens d'étanchéité comportent un joint élastomère (244) monté dans une gorge (254) d'une cloison de séparation (256) se prolongeant à la périphérie externe dudit cylindre distributeur et serpentant entre lesdits premiers et seconds orifices de dosage.

9. Dispositif selon la revendication 1, **caractérisé en ce que** lesdits moyens d'étanchéité comportent un joint élastomère (261) monté dans une gorge (262) d'un puits de séparation (258) disposé autour de chacun desdits premiers orifices de dosage, afin de les isoler desdits seconds orifices de dosage.

## Patentansprüche

1. Treibstoffdosiervorrichtung in einer Turbomaschine, umfassend eine äußere zylindrische Hülle (22), in der ein Verteilerzylinder (24) angebracht ist, in welchem sich linear ein Dosierungskolben (26) unter der Wirkung eines Steuerelementes (28) bewegen kann, wobei die Zylinderhülle eine Eingangsöffnung (220) zum Einlaß des Treibstoffes unter Druck umfaßt und erste und zweite Austrittsöffnungen (222, 224) für die Einspritzung dieses Treibstoffes in eine Brennkammer der Turbomaschine und der Dosierungskolben einen ringförmigen Zwischenraum (260) umfaßt, der eine Verteilerkammer für den Treibstoff bildet, der durch die Eingangsöffnung eingelassen wird und durch die ersten und zweiten Austrittsöffnungen verdrängt wird, **dadurch gekennzeichnet, daß** der Verteilerzylinder eine Vielzahl von radialen Einlaßöffnungen (248) umfaßt, um den Treibstoff in die Verteilerkammer von der Eintrittsöffnung aus einzulassen und einerseits wenigstens eine erste Dosieröffnung (250a, 250b), um den Treibstoff zu der ersten Austrittsöffnung auszustoßen und andererseits wenigstens eine zweite Dosieröffnung (252a, 252b), um den Treibstoff zu der zweiten Austrittsöffnung auszustoßen, wobei wenigstens eine erste und wenigstens eine zweite Dosieröffnung getrennt sind durch Dichtungsmittel (244, 261), die auf dem Umfang des Verteilerzylinders und in einer selben Querebene derart angeordnet sind, daß ein kontinuierlicher Treibstofffluß zur Verbrennungskammer bei der Bewegung des Dosierkolbens sichergestellt wird.

2. Vorrichtung nach Anspruch 1, **dadurch gekennzeichnet, daß** die ersten Dosieröffnungen zwei sind und radial zueinander gegenüber angeordnet sind.

3. Vorrichtung nach Anspruch 2, **dadurch gekennzeichnet, daß** die ersten Dosieröffnungen einen exponentiellen Strömungsquerschnitt aufweisen.

4. Vorrichtung nach Anspruch 1 oder Anspruch 2, **dadurch gekennzeichnet, daß** die zweiten Dosieröffnungen zwei sind und radial gegenüber zueinander angeordnet sind.

5. Vorrichtung nach Anspruch 4, **dadurch gekennzeichnet, daß** die zweiten Dosieröffnungen einen exponentiellen Strömungsquerschnitt aufweisen.

6. Vorrichtung nach Anspruch 1, **dadurch gekennzeichnet, daß** die ersten Dosieröffnungen eine Breite a auf der Ebene von deren stromabwärts gelegenen Teil aufweisen, die gleich einer Breite b der zweiten Dosieröffnungen auf der Ebene von deren stromaufwärts gelegenen Teil ist.

7. Vorrichtung nach Anspruch 1, **dadurch gekennzeichnet, daß** die ersten und zweiten Dosieröffnungen paarweise um 90° versetzt sind.

8. Vorrichtung nach Anspruch 1, **dadurch gekennzeichnet, daß** die Dichtungsmittel eine Elastomerfuge (244) umfassen, die in einer Vertiefung (254) einer Trennwand (256) angebracht ist, welche sich um den Außenumfang des Verteilerzylinders verlängert und unter den ersten und zweiten Dosieröffnungen trennt.

9. Vorrichtung nach Anspruch 1, **dadurch gekennzeichnet, daß** die Dichtungsmittel eine Elastomerfuge (261) umfassen, welche in einer Vertiefung (262) eines Schachts zur Trennung (258) angeordnet ist, der um jede der ersten Dosierungsöffnungen herum angeordnet ist, um sie von den zweiten Dosieröffnungen zu isolieren.

## Claims

1. A fuel metering unit in a turbomachine, the unit comprising an outer cylindrical sleeve (22) having mounted therein a distributor cylinder (24) in which a metering piston (26) can move linearly under the action of a control element (28), said cylindrical sleeve having an inlet orifice (220) for admitting fuel under pressure and first and second outlet orifices (222, 224) for injecting said fuel into a combustion chamber of said turbomachine, and said metering piston including an annular gap (260) forming a distribution chamber for the fuel admitted via said inlet orifice and delivered via said first and second outlet orifices, said unit being **characterised in that** said distributor cylinder has a plurality of radial feed orifices (248) for admitting fuel into said distribution chamber from said inlet orifice, and both at least one first metering orifice (250a, 250b) for expelling the fuel to said first outlet orifice, and at least one second metering orifice (252a, 252b) for expelling the fuel towards said second outlet orifice, said at least one first and at least one second metering orifices being separated by sealing means (244, 261) placed at the periphery of said distributor cylinder, and placed in a common transverse plane, so as to ensure fuel flow continuity towards said combustion chamber during displacement of said metering piston.

2. A unit according to claim 1, **characterised in that** said first metering orifices are two in number and they are placed diametrically opposite each other.

3. A unit according to claim 2, **characterised in that** said first metering orifices present a flow section that is exponential.

4. A unit according to claim 1 or claim 2, **characterised in that** said second metering orifices are two in number and they are disposed diametrically opposite each other.

5. A unit according to claim 4, **characterised in that** said second metering orifices present a flow section that is exponential.

6. A unit according to claim 1, **characterised in that** said first metering orifices present a width a at their downstream ends that is equal to a width b of said second metering orifices at their upstream ends.

7. A unit according to claim 1, **characterised in that** said first and second metering orifices are offset in pairs by 90°.

8. A unit according to claim 1, **characterised in that** said sealing means comprise an elastomer gasket (244) mounted in a groove (254) of a separating partition (256) extending from the outer periphery of said distributor cylinder and zigzagging between said first and second metering orifices.

9. A unit according to claim 1, **characterised in that** said sealing means comprise an elastomer gasket (261) mounted in a groove (262) of a separation well (258) disposed around each of said metering orifices so as to isolate them from said second metering orifices.
